# EUROPEAN PATENT SPECIFICATION

(11) **EP 4 071 015 B1**
(45) Date of publication and mention of the grant of the patent: **14.08.2024**
(21) Application number: 21167297.7
(22) Date of filing: 08.04.2021
(51) Int. Cl.: B60T 17/08, F16D 65/28

(54) **PNEUMATIC SPRING BRAKE ACTUATOR**
PNEUMATISCHER FEDERBREMSZYLINDER
ACTIONNEUR DE FREIN À RESSORT PNEUMATIQUE

(43) Date of publication of application: 12.10.2022
(73) Proprietor: ZF CV Systems Europe BV, 1170 Brussels (BE)
(72) Inventor: FLISEK, Filip, 59-900 Zgorzelec (PL); FRANCZUK, Michal, 49-305 Brzeg (PL); KOSZUT, Michal, 48-340 Glucholazy (PL)
(74) Representative: Ohlendorf, Henrike

(56) References cited:
- US-A1- 2007 214 953
- US-A1- 2007 246 313
- US-A1- 2010 320 039
- US-B1- 6 435 321

## Description

The invention relates to a pneumatic spring brake actuator, in particular a parking and service brake actuator for use in a commercial vehicle, said actuator comprising a housing comprising a housing base, a spring brake piston accommodated at least partially in said housing said spring brake piston being configured to reciprocatingly move between a retained position and an extended position along a longitudinal axis as a function of pressure inside a spring brake pressure chamber, and a compression spring located between the housing and the spring brake piston, said compression spring being effective to push the spring brake piston towards the extended position.

Pneumatic spring brake actuators of the aforementioned kind are commonly used in the commercial vehicle industry. It is the aim of such pneumatic service brake actuators to generate a braking force which is, in turn, transmitted to the vehicle wheel.

State of the art pneumatic spring brake actuators comprise two units that are arranged behind one another along a longitudinal axis of said actuator: a spring brake part and a service brake part. In these configurations, the spring brake part provides an emergency braking functionality and the service brake part a service brake functionality. The two components are connected together and often act upon the same brake components which transmit the brake force to the vehicle wheel. Although these actuators are commonly used and well proven, there is still room for improvement.

US 2010/0320039 A1 and US 6,435,321 B1 shows a brake cylinder for vehicles wherein the brake cylinder is compact and simple to construct.

US 2007/0246313 A1 refers also to a short brake cylinder for motor vehicles. The spring loaded piston and the pressurized piston connected each other through a shift cylinder.

US 2007/0214953 A1 refers to a combined service brake and spring brake cylinder wherein the brake piston configured to reciprocatingly move between a retained position and an extended position.

One major drawback associated with these kinds of actuators is that they require a considerable amount of assembly volume, especially assembly length.

This required assembly length, however, is not available at any vehicle configuration. As a consequence, it was an object of the invention to provide a pneumatic spring brake actuator of the initially mentioned type which overcomes the aforementioned problems as much as possible. In particular, it was an object of the invention to provide a pneumatic spring brake actuator comprising a smaller total length.

The invention attains the aforementioned object by suggesting a pneumatic service brake actuator according to claim 1. According to the invention, it is proposed that the spring brake piston comprises a service brake pressure chamber, a piston chamber, and a service brake piston separating the service brake pressure chamber from the piston chamber, wherein said service brake piston is configured to reciprocratingly move between a retained position and an extended position along said longitudinal axis as a function of pressure inside the service brake pressure chamber.

The invention is based upon the finding that by integrating said service brake pressure chamber, piston chamber and piston into said spring brake piston, the overall length of said actuator can be reduced significantly. In other words, the proposed design no longer proposed to arrange spring brake part and service brake part behind one another, but integrated with regard to one another.

When the spring brake piston is forced towards its retained position by pressure inside said spring brake pressure chamber, the overall braking force is generated by means of said service brake piston. In case, however, the parking or emergency braking function is required, pressure from the spring brake pressure chamber is be released, which results in the compression spring acting upon the spring brake piston and forcing it towards an extended position. Thereby, a braking force may be applied to the wheel brakes without additionally activating said service brake.

According to a preferred embodiment said service brake pressure chamber is arranged coaxially, with regard said longitudinal axis, around said spring brake pressure chamber. This coaxial design helps to reduce the overall length of the actuator.

According to the invention, said spring brake piston comprises a front face, said front face being arranged opposite from said housing base, and a first pipe section extending from said front face towards said housing base, wherein said first pipe section radially limits said service brake pressure chamber and piston chamber. With the help of such first pipe section, the service brake pressure chamber and the piston chamber are at least partially established within said spring brake piston.

According to the invention, said spring brake piston comprises a second pipe section extending coaxially around said first pipe section, wherein said second pipe section comprises a radial protrusion abutting against a radial wall of said housing, wherein a volume between said second pipe section, said protrusion and said radial wall defines said spring brake pressure chamber. Preferably, said compression spring is arranged between said first pipe section and said second pipe section.

According to yet another preferred embodiment, said protrusion comprises a seal configured to seal said protrusion against said radial housing wall. Such seal may be a radial shaft seal, for example. With the help of such seal, said spring brake pressure chamber may be sealed appropriately.

Preferably, said actuator comprises a guide sleeve being connected to said housing base, wherein said guide sleeve is configured for radially guiding said spring brake piston. Preferably, a seal is provided between said guide sleeve and said spring brake piston. With the help of this arrangement, it is ensured that said service brake pressure chamber is sealed appropriately.

According to yet another preferred embodiment, said guide sleeve comprises a sleeve section for radially guiding said first pipe section of said spring brake piston and a flange section arranged adjacent to said sleeve section, wherein said flange section extends radially from said sleeve section. With the help of such flange section, the guide sleeve may be mounted durably to said housing base. Preferably, said flange section is connected to said housing base by means of a screw joint. Said screw joint preferably comprises screws arranged on a circle around the longitudinal axis at said housing base.

According to yet another preferred embodiment, said actuator comprises a piston spring arranged inside said piston chamber, said piston spring being effective to push the spring brake piston towards said retained position.

Preferably, said housing comprises a housing flange section extending radially outwards from said radial housing wall, and a cover section abutting against said flange section, wherein said cover section comprises an opening configured for accommodating said second pipe section of said spring brake piston. With the help of this configuration, the actuator can be conveniently mounted wherein said spring brake piston is enabled to be moved into said extended position.

Preferably, said cover section comprises a spring brake port for providing pressurized fluid to said spring brake pressure chamber. Said port preferably extends radially outwards from said cover section. In this way, the dimensions of said actuator with regard to its length can be further reduced, since no additional volume in the length direction is required for said spring brake port.

According to yet another preferred embodiment, said spring piston chamber comprises a step for limiting a movement of said service brake piston towards said extending position. In other words, with the help of the positioning of said step, the extended position of said service brake piston is defined. Preferably, said housing base comprises a service brake port for providing pressurized fluid to said service brake pressure chamber, wherein said service brake port is centered along said longitudinal axis. With the help of said service brake port, pressurized fluid can be provided to said service brake, in particular said service brake pressure chamber.

According to yet another preferred embodiment, said actuator comprises a brake release mechanism configured for releasing said spring brake piston against said compression spring. It is the aim of said release mechanisms to release said spring brake piston, for example in case of pneumatic system malfunctions. Preferably, said service brake port is configured for accommodating said release mechanism at least partially. In other words, said service brake port has to two functions. On the one hand, the port is utilized to provide pressurized fluid to said service brake and on the other hand, said port is utilized for inserting the brake release mechanism into the actuator.

For a more complete understanding of the invention, the invention will now be described in detail with reference of the accompanying drawings. The detailed description will illustrate and describe what is considered as a preferred embodiment of the invention. It is therefore intended that the invention may not be limited to the exact form and detail shown and described herein, nor to anything or less than the whole of the invention disclosed herein and is claimed thereafter. The invention is limited only within the scope of the appended claims.

Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude a plurality.

The invention will now be described with reference to the accompanying drawings which illustrate, by way of example and not by way of limitations, one of several possible embodiments of the spring brake actuator proposed herein, and wherein:
Fig. 1 shows a preferred embodiment of a pneumatic spring brake actuator according to the concept of the invention in a sectional view;
Figs. 2 and 3 show different perspective views of said pneumatic spring brake actuator according to fig. 1; and
Figs. 4 and 5 show a brake release mechanism according to the concept of the invention.

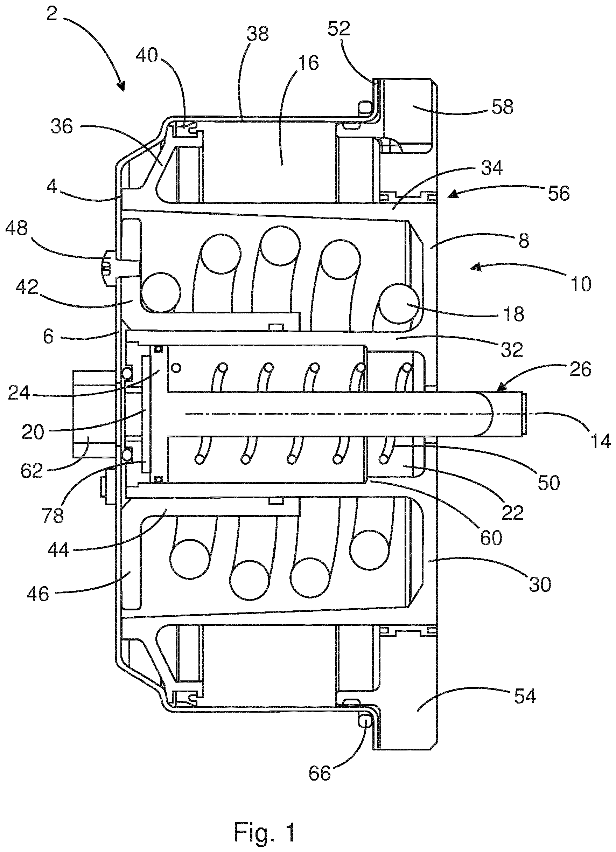

Fig. 1 shows a pneumatic spring brake actuator 2. The spring brake actuator 2 is a parking and service brake actuator 2 for use in a commercial vehicle (not shown). The spring brake actuator 2 comprises a housing 4. The housing 4 comprises a housing base 6. The spring brake actuator 2 comprises a spring brake piston 8. The spring brake piston 8 is at least partially accommodated in the housing 4. The spring brake piston 8 is configured to reciprocratingly move between a retained position 10 and an extended position (not shown) along a longitudinal axis 14. The spring brake actuator 2 furthermore comprises a spring brake pressure chamber 16. The spring brake piston 8 moves between the retained position 10 and the extended position (not shown) as a function of pressure inside the spring brake pressure chamber 16.

A compression spring 18 is located between the housing 4 and the spring brake piston 8. The compression spring 18 is effective to push the spring brake piston 8 towards the extended position (not shown). The spring brake piston 8 furthermore comprises a service brake pressure chamber 20. The spring brake piston 8 furthermore comprises a piston chamber 22. The spring brake piston 8 moreover comprises a service brake piston 24. The service brake piston 24 separates the service brake pressure chamber 20 from the piston chamber 22. The service brake piston 22 is configured to reciprocatingly move between a retained position 26 and an extend position 28 along the longitudinal axis 14 as a function of pressure inside the service brake pressure chamber 20. The service brake pressure chamber 20 is arranged coaxially, with regard to said longitudinal axis 14, around the spring brake pressure chamber 16.

The spring brake piston 8 comprises a front face 30. The front face 30 is arranged opposite the housing base 6. The spring brake piston 8 comprises a first pipe section 32. The first pipe section extends from the front face 30 towards the housing base 6. The first pipe section 32 radially limits the service brake pressure chamber 20 and the piston chamber 22.

The spring brake piston 8 comprises a second pipe section 34. The second pipe section 34 extends coaxially around the first pipe section 32. The second pipe section 34 comprises a radial protrusion 36. The radial protrusion 36 abuts against a radial wall 38 of said housing 4. A volume between the second pipe section 34, the protrusion 36 and the radial wall 38 defines the spring brake pressure chamber 16. The compression spring 18 is arranged between the first pipe section 32 and the second pipe section 34.

The protrusion 36 comprises a seal 40. The seal 40 is configured to seal the protrusion 36 against the radial housing wall 38. The actuator 2 furthermore comprises a guide sleeve 42. The guide sleeve 42 is connected to the housing base 6. The guide sleeve 42 is configured for radially guiding said spring brake piston 8. The guide sleeve 42 comprises a sleeve section 44. The sleeve section 44 radially guides said first pipe section 32 of said spring brake piston 8. The guide sleeve 42 furthermore comprises a flange section 46. The flange section 46 is arranged adjacent to said sleeve section 44. The flange section 46 extends radially from the sleeve section 44. The flange section 46 is connected to the housing base 6 by means of screw joints 48.

The actuator 2 comprises a piston spring 50. The piston spring 50 is arranged inside the piston chamber 22. The piston spring 50 is effective to push the spring brake piston 8 towards the retained position 26.

The housing 4 comprises a housing flange section 52. The housing flange section 52 extends radially outwards from the radial housing wall 38. The housing 4 furthermore comprises a cover section 54. The cover section 54 abuts against the flange section 46. The cover section 54 comprises an opening 56. The opening 56 is configured for accommodating the second pipe section 34 of the spring brake 4 of the spring brake piston 8.

The cover section 54 comprises a spring brake port 58. The spring brake port 58 is configured for providing pressurized fluid to the spring brake pressure chamber 16. The spring brake port 58 extends radially outwards from said cover section 54.

The piston chamber 22 comprises a step 60. The step 60 limits a movement of service brake piston 24 towards the extended position. The housing base 6 comprises a service brake port 62. The service brake port 62 provides pressurized fluid to the service brake pressure chamber 20. The service brake port 62 is centered along the longitudinal axis 14.

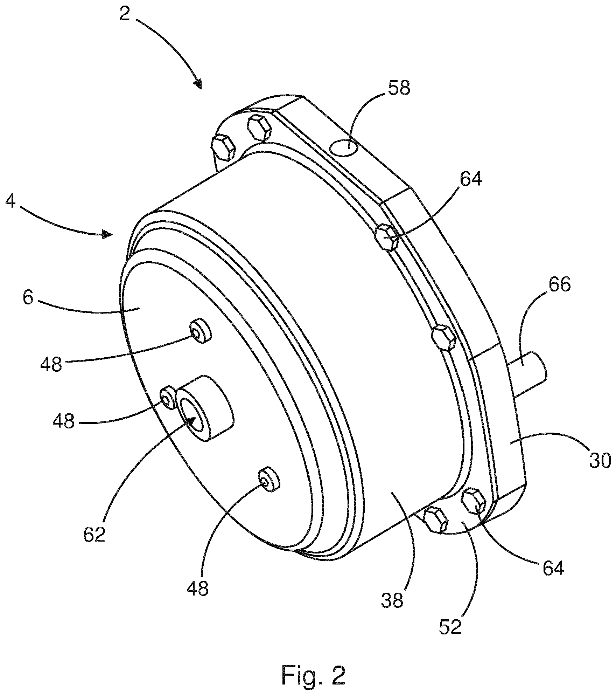

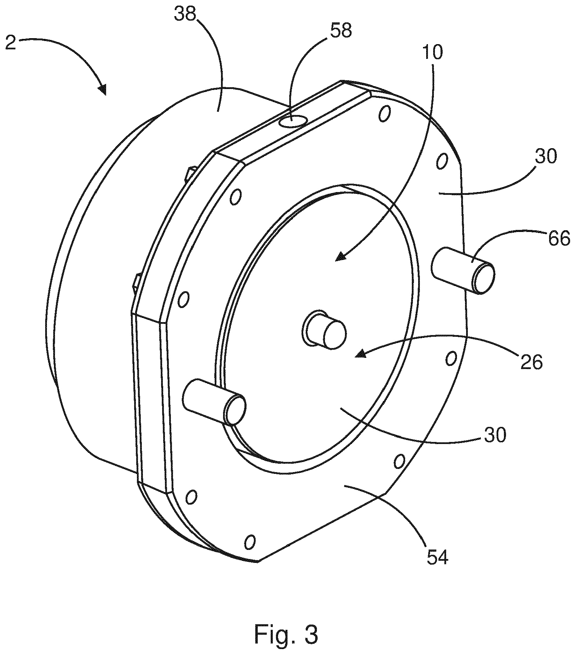

Figs. 2 and 3 show perspective views of the spring brake actuator 2. According to fig. 2, the spring brake actuator 2 comprises the housing 4 having the housing base 6. The housing base 6 comprises the service brake port 62, wherein the service brake port 62 is centered along the longitudinal axis 14. The housing 4 furthermore comprises the radial housing wall 38 and the housing flange section 52 extending radially outwards from the radial housing wall 38. The cover section 54 abuts against the flange section 46. The cover section 54 is connected to the housing flange section 52 by means of screws 64. The spring brake port 58 extends radially outwards from the cover section 54. Fig. 2 furthermore shows the screw joint 48 connecting the flange section 46 (see fig. 1) to the housing base 6. The housing 4 furthermore comprises alignment bolts 66 connected to the cover section 54.

Fig. 3 shows the spring brake actuator 2 in a rotated perspective, compared to fig. 2. In addition to the features shown in fig. 2, fig. 3 shows the two alignment bolts 66 being connected to the cover section 54. Furthermore, the front face 30 of the spring brake piston 8 is shown, through which the service brake piston 24 is guided. The service brake piston 24 is utilized to provide a braking force to the vehicle brakes (not shown).

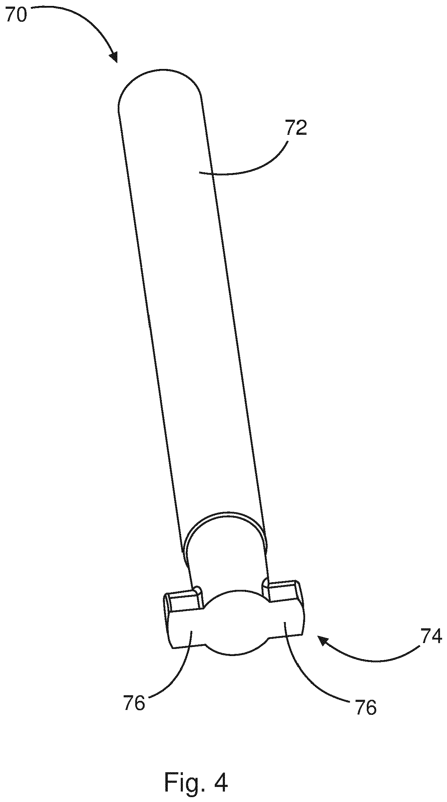

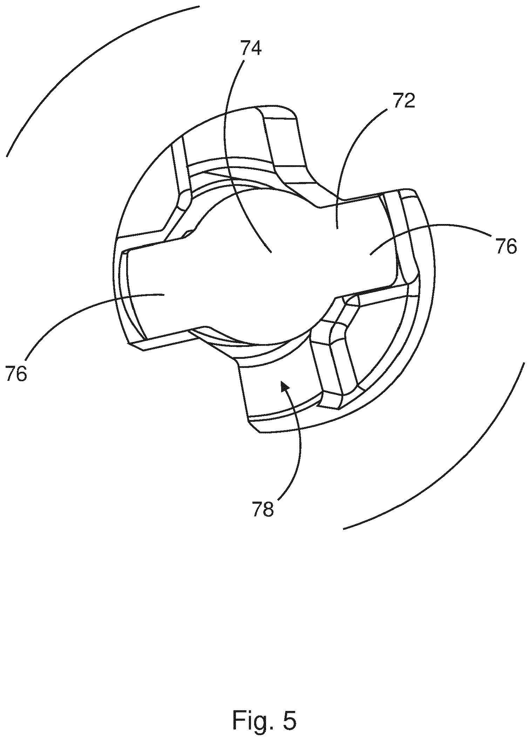

Fig. 4 shows a brake release mechanism 70. The brake release mechanism 70 is configured for releasing the brake piston 8 against a force of the compression spring 18. The brake release mechanism 70 comprises a brake release bolt 72. The brake release bolt comprises a head section 74 comprising two locking protrusions 76. As shown in fig. 5, these locking protrusions 76 are configured to interact with a receiving section 78 for releasing the spring brake piston 8 against the compression spring 18.

### List of references (Part of the description)

- 2: spring brake actuator
- 4: housing
- 6: housing base
- 8: spring brake piston
- 10: retained position of spring brake piston
- 14: longitudinal axis
- 16: spring brake pressure chamber
- 18: compression spring
- 20: service brake pressure chamber
- 22: piston chamber
- 24: service brake piston
- 26: retained position of spring brake piston
- 30: front face
- 32: first pipe section
- 34: second pipe section
- 36: radial protrusion
- 38: radial housing wall
- 40: seal
- 42: guide sleeve
- 44: sleeve section
- 46: flange section
- 48: screw joint
- 50: piston spring
- 52: housing flange section
- 54: cover section
- 56: opening
- 58: spring brake port
- 60: step
- 62: service brake port
- 64: screws
- 66: alignment bolts
- 70: brake release mechanism
- 72: brake release bolt
- 74: head section
- 76: locking protrusions
- 78: receiving section

## Claims

1. A pneumatic spring brake actuator (2), in particular a parking and service brake actuator (2) for use in a commercial vehicle, said spring brake actuator (2) comprising:
- a housing (4) comprising a housing base (6),
- a spring brake piston (8) accommodated at least partially in said housing (4), said spring brake piston (8) being configured to reciprocatingly move between a retained position (10) and an extended position along a longitudinal axis (14) as a function of pressure inside a spring brake pressure chamber (16),
- a compression spring (18) located between the housing (4) and the spring brake piston (8), said compression spring (18) being effective to push the spring brake piston (8) towards the extended position,
**characterized in that** the spring brake piston (8) comprises:
- a service brake pressure chamber (20),
- a piston chamber (22), and
- a service brake piston (24) separating the service brake pressure chamber (20) from the piston chamber (22), wherein said service brake piston (24) is configured to reciprocatingly move between a retained position (26) and an extended position along said longitudinal axis (14) as a function of pressure inside the service brake pressure chamber (20), wherein said spring brake piston (8) comprises a front face (30), said front face (30) being arranged opposite from said housing base (6), and a first pipe section (32) extending from said front face (30) towards said housing base (6), wherein said first pipe section (32) radially limits said service brake pressure chamber (20) and piston chamber (22), **characterized in that** the said spring brake piston (8) comprises a second pipe section (34) extending coaxially around said first pipe section (32), wherein said second pipe section (34) comprises a radial protrusion (36) abutting against a radial wall (38) of said housing (4), wherein a volume between said second pipe section (34), said protrusion (36) and said radial wall (38) defines said spring brake pressure chamber (16).

2. The spring brake actuator (2) according to claim 1,
wherein said service brake pressure chamber (20) is arranged coaxially, with regard to said longitudinal axis (14), around said spring brake pressure chamber (16).

3. The spring brake actuator (2) according to claim 1 or 2,
wherein said protrusion (36) comprises a seal (40) configured to seal said protrusion (36) against said radial housing wall (38).

4. The spring brake actuator (2) according to any of the preceding claims, wherein said actuator (2) comprises a guide sleeve (42) being connected to said housing base (6), and wherein said guide sleeve (42) is configured for radially guiding said spring brake piston (8).

5. The spring brake actuator (2) according to claim 4,
wherein the guide sleeve (42) comprises a sleeve section (44) for radially guiding said first pipe section (32) of said spring brake piston (8) and a flange section (46) arranged adjacent to said sleeve section (44), wherein said flange section (46) extends radially from said sleeve section (44).

6. The spring brake actuator (2) according to claim 5,
wherein said flange section (46) is connected to said housing base (6) by means of a screw joint (48).

7. The spring brake actuator (2) according to claim 1,
wherein said actuator (2) comprises a piston spring (50) arranged inside said piston chamber (22), said piston spring (50) being effective to push the spring brake piston (8) towards said retained position (26).

8. The spring brake actuator (2) according to claim 1,
wherein said housing (4) comprises a housing flange section (52) extending radially outwards from said radial housing wall (38), and a cover section (54) abutting against said flange section (46), wherein said cover section (54) comprises an opening (56) configured for accommodating said second pipe section (34) of said spring brake piston (8).

9. The spring brake actuator (2) according to claim 8,
wherein said cover section (54) comprises a spring brake port (58) for providing pressurized fluid to said spring brake pressure chamber (16).

10. The spring brake actuator (2) according to claim 9, wherein said spring brake port (58) extends radially outwards from said cover section (54).

11. The spring brake actuator (2) according to claim 1,
wherein said piston chamber (22) comprises a step (60) for limiting a movement of said service brake piston (24) towards said extended position.

12. The spring brake actuator (2) according to claim 1,
wherein said housing base (6) comprises a service brake port (62) for providing pressurized fluid to said service brake pressure chamber (20), wherein said service brake port (62) is centered along said longitudinal axis (14).

13. The spring brake actuator (2) according to claim 1,
wherein said actuator (2) comprises a brake release mechanism (70) configured for releasing said spring brake piston (8) against said compression spring (18).

14. The spring brake actuator (2) according to claim 12,
wherein said service brake port (62) is configured for accommodating said release mechanism (70) at least partially.

## Patentansprüche

1. Pneumatischer Federspeicherbremszylinder (2), insbesondere ein Feststell- und Dienstbremszylinder (2) für eine Verwendung in einem Nutzfahrzeug, der Federspeicherbremszylinder (2) umfassend:
- ein Gehäuse (4) umfassend eine Gehäusebasis (6),
- einen Federspeicherbremskolben (8), der mindestens teilweise in dem Gehäuse (4) untergebracht ist, wobei der Federspeicherbremskolben (8) konfiguriert ist, um sich zwischen einer festgehaltenen Position (10) und einer ausgefahrenen Position entlang einer Längsachse (14), abhängig von einem Druck im Inneren einer Federspeicherbremsdruckkammer (16) hin- und herzubewegen,
- eine Druckfeder (18), die sich zwischen dem Gehäuse (4) und dem Federspeicherbremskolben (8) befindet, wobei die Druckfeder (18) wirksam ist, um den Federspeicherbremskolben (8) zu der ausgefahrenen Position hin zu drücken,
**dadurch gekennzeichnet, dass** der Federspeicherbremskolben (8) umfasst:
- eine Betriebsbremsdruckkammer (20),
- eine Kolbenkammer (22), und
- einen Betriebsbremskolben (24), der die Betriebsbremsdruckkammer (20) von der Kolbenkammer (22) trennt, wobei der Betriebsbremskolben (24) konfiguriert ist, um sich zwischen einer festgehaltenen Position (26) und einer ausgefahrenen Position entlang der Längsachse (14), abhängig von einem Druck im Inneren der Betriebsbremsdruckkammer (20) hin- und herzubewegen, wobei der Federspeicherbremskolben (8) eine Vorderseite (30) umfasst, wobei die Vorderseite (30) gegenüber der Gehäusebasis (6) angeordnet ist, und sich ein erster Rohrabschnitt (32) von der Vorderseite (30) zu der Gehäusebasis (6) hin erstreckt, wobei der erste Rohrabschnitt (32) die Betriebsbremsdruckkammer (20) und die Kolbenkammer (22) radial begrenzt, **dadurch gekennzeichnet, dass** der Federspeicherbremskolben (8) einen zweiten Rohrabschnitt (34) umfasst, der sich koaxial um den ersten Rohrabschnitt (32) erstreckt, wobei der zweite Rohrabschnitt (34) einen radialen Vorsprung (36) umfasst, der an einer radialen Wand (38) des Gehäuses (4) anliegt, wobei ein Volumen zwischen dem zweiten Rohrabschnitt (34), dem Vorsprung (36) und der radialen Wand (38) die Federspeicherbremsdruckkammer (16) definiert.

2. Federspeicherbremszylinder (2) nach Anspruch 1,
wobei die Betriebsbremsdruckkammer (20) koaxial bezüglich der Längsachse (14) um die Federspeicherbremsdruckkammer (16) angeordnet ist.

3. Federspeicherbremszylinder (2) nach Anspruch 1 oder 2,
wobei der Vorsprung (36) eine Dichtung (40) umfasst, die konfiguriert ist, um den Vorsprung (36) gegen die radiale Gehäusewand (38) abzudichten.

4. Federspeicherbremszylinder (2) nach einem der vorstehenden Ansprüche, wobei der Zylinder (2) eine Führungshülse (42) umfasst, die mit der Gehäusebasis (6) verbunden ist, und wobei die Führungshülse (42) zum radialen Führen des Federspeicherbremskolbens (8) konfiguriert ist.

5. Federspeicherbremszylinder (2) nach Anspruch 4,
wobei die Führungshülse (42) einen Hülsenabschnitt (44) zum radialen Führen des ersten Rohrabschnitts (32) des Federspeicherbremskolbens (8) und einen Flanschabschnitt (46), der benachbart zu dem Hülsenabschnitt (44) angeordnet ist, umfasst, wobei sich der Flanschabschnitt (46) von dem Hülsenabschnitt (44) radial erstreckt.

6. Federspeicherbremszylinder (2) nach Anspruch 5,
wobei der Flanschabschnitt (46) mit der Gehäusebasis (6) mittels einer Schraubverbindung (48) verbunden ist.

7. Federspeicherbremszylinder (2) nach Anspruch 1,
wobei der Zylinder (2) eine Kolbenfeder (50) umfasst, die im Inneren der Kolbenkammer (22) angeordnet ist, wobei die Kolbenfeder (50) wirksam ist, um den Federspeicherbremskolben (8) zu der Festhalteposition (26) hin zu drücken.

8. Federspeicherbremszylinder (2) nach Anspruch 1,
wobei das Gehäuse (4) einen Gehäuseflanschabschnitt (52), der sich radial nach außen von der radialen Gehäusewand (38) erstreckt, und einen Abdeckungsabschnitt (54), der an dem Flanschabschnitt (46) anliegt, umfasst, wobei der Abdeckungsabschnitt (54) eine Öffnung (56) umfasst, die zum Unterbringen des zweiten Rohrabschnitts (34) des Federspeicherbremskolbens (8) konfiguriert ist.

9. Federspeicherbremszylinder (2) nach Anspruch 8,
wobei der Abdeckungsabschnitt (54) einen Federspeicherbremsanschluss (58) zum Bereitstellen von druckbeaufschlagtem Fluid an die Federspeicherbremsdruckkammer (16) umfasst.

10. Federspeicherbremszylinder (2) nach Anspruch 9,
wobei sich der Federspeicherbremsanschluss (58) von dem Abdeckungsabschnitt (54) radial nach außen erstreckt.

11. Federspeicherbremszylinder (2) nach Anspruch 1,
wobei die Kolbenkammer (22) eine Stufe (60) zum Begrenzen einer Bewegung des Betriebsbremskolbens (24) zu der ausgefahrenen Position hin umfasst.

12. Federspeicherbremszylinder (2) nach Anspruch 1,
wobei die Gehäusebasis (6) einen Betriebsbremsenanschluss (62) zum Bereitstellen von druckbeaufschlagtem Fluid an die Betriebsbremsendruckkammer (20) umfasst, wobei der Betriebsbremsenanschluss (62) entlang der Längsachse (14) zentriert ist.

13. Federspeicherbremszylinder (2) nach Anspruch 1,
wobei der Zylinder (2) einen Bremslösemechanismus (70) umfasst, der zum Lösen des Federspeicherbremskolbens (8) gegen die Druckfeder (18) konfiguriert ist.

14. Federspeicherbremszylinder (2) nach Anspruch 12,
wobei der Betriebsbremsanschluss (62) konfiguriert ist, um den Lösemechanismus (70) mindestens teilweise unterzubringen.

## Revendications

1. Actionneur de frein à ressort pneumatique (2), en particulier un actionneur de frein à ressort de stationnement ou de service (2) pour une utilisation dans un véhicule utilitaire, ledit actionneur de frein à ressort (2) comprenant :
- un boîtier (4) comprenant une base de boîtier (6),
- un piston de frein à ressort (8) logé au moins partiellement dans ledit boîtier (4), ledit piston de frein à ressort (8) étant conçu pour se déplacer alternativement entre une position retenue (10) et une position étendue le long d'un axe longitudinal (14) en tant que fonction de pression à l'intérieur d'une chambre de pression de frein à ressort (16),
- un ressort de compression (18) situé entre le boîtier (4) et le piston de frein à ressort (8), ledit ressort de compression (18) étant efficace pour pousser le piston de frein à ressort (8) vers la position étendue,
**caractérisé en ce que** le piston de frein à ressort (8) comprend :
- une chambre de pression de frein de service (20),
- une chambre de piston (22), et
- un piston de frein de service (24) séparant la chambre de pression de frein de service (20) de la chambre de piston (22), dans lequel ledit piston de frein de service (24) est conçu pour se déplacer alternativement entre une position retenue (26) et une position étendue le long dudit axe longitudinal (14) en tant que fonction de pression à l'intérieur de la chambre de pression de frein de service (20), dans lequel ledit piston de frein à ressort (8) comprend une face avant (30), ladite face avant (30) étant agencée à l'opposé de ladite base de boîtier (6), et une première section de tuyau (32) s'étendant de ladite face avant (30) vers ladite base de boîtier (6), dans lequel ladite première section de tuyau (32) limite radialement ladite chambre de pression de frein de service (20) et la chambre de piston (22), **caractérisé en ce que** ledit piston de frein à ressort (8) comprend une seconde section de tuyau (34) s'étendant coaxialement autour de ladite première section de tuyau (32), dans lequel ladite seconde section de tuyau (34) comprend une saillie radiale (36) venant en butée contre une paroi radiale (38) dudit boîtier (4), dans lequel un volume entre ladite seconde section de tuyau (34), ladite saillie (36) et ladite paroi radiale (38) définit ladite chambre de pression de frein à ressort (16).

2. Actionneur de frein à ressort (2) selon la revendication 1,
dans lequel ladite chambre de pression de frein de service (20) est agencée coaxialement, par rapport à l'axe longitudinal (14), autour de ladite chambre de pression de frein à ressort (16).

3. Actionneur de frein à ressort (2) selon la revendication 1 ou 2,
dans lequel ladite saillie (36) comprend un joint (40) conçu pour sceller ladite saillie (36) contre ladite paroi radiale du boîtier (38).

4. Actionneur de frein à ressort (2) selon l'une quelconque des revendications précédentes,
dans lequel ledit actionneur (2) comprend un manchon de guidage (42) relié à ladite base de boîtier (6), et dans lequel ledit manchon de guidage (42) est conçu pour guider radialement ledit piston de frein à ressort (8).

5. Actionneur de frein à ressort (2) selon la revendication 4,
dans lequel le manchon de guidage (42) comprend une section de manchon (44) pour guider radialement ladite première section de tuyau (32) dudit piston de frein à ressort (8) et une section de bride (46) agencée à proximité de ladite section de manchon (44), dans lequel ladite section de bride (46) s'étend radialement à partir de ladite section de manchon (44).

6. Actionneur de frein à ressort (2) selon la revendication 5,
dans lequel ladite section de bride (46) est reliée à ladite base de boîtier (6) au moyen d'un joint à vis (48).

7. Actionneur de frein à ressort (2) selon la revendication 1,
dans lequel ledit actionneur (2) comprend un ressort de piston (50) agencé à l'intérieur de ladite chambre de piston (22), ledit ressort de piston (50) étant efficace pour pousser le piston de frein à ressort (8) vers ladite position retenue (26).

8. Actionneur de frein à ressort (2) selon la revendication 1,
dans lequel ledit boîtier (4) comprend une section de bride de boîtier (52) s'étendant radialement vers l'extérieur à partir de ladite paroi radiale de boîtier (38), et une section de couvercle (54) venant en butée contre ladite section de bride (46), dans lequel ladite section de couvercle (54) comprend une ouverture (56) conçue pour loger ladite seconde section de tuyau (34) dudit piston de frein à ressort (8).

9. Actionneur de frein à ressort (2) selon la revendication 8,
dans lequel ladite section de couvercle (54) comprend un orifice de frein à ressort (58) pour fournir un fluide sous pression à ladite chambre de pression de frein à ressort (16).

10. Actionneur de frein à ressort (2) selon la revendication 9,
dans lequel ledit orifice de frein à ressort (58) s'étend radialement vers l'extérieur à partir de ladite section de couvercle (54).

11. Actionneur de frein à ressort (2) selon la revendication 1,
dans lequel ladite chambre de piston (22) comprend une étape (60) pour limiter un mouvement dudit piston de frein de service (24) vers ladite position étendue.

12. Actionneur de frein à ressort (2) selon la revendication 1,
dans lequel ladite base de boîtier (6) comprend un orifice de frein de service (62) pour fournir un fluide sous pression à ladite chambre de pression de frein de service (20), dans lequel ledit orifice de frein de service (62) est centré le long dudit axe longitudinal (14).

13. Actionneur de frein à ressort (2) selon la revendication 1,
dans lequel ledit actionneur (2) comprend un mécanisme de libération de frein (70) conçu pour libérer ledit piston de frein à ressort (8) contre ledit ressort de compression (18).

14. Actionneur de frein à ressort (2) selon la revendication 12,
dans lequel ledit orifice de frein de service (62) est conçu pour loger ledit mécanisme de libération (70) au moins partiellement.
